# FASCICULE DE BREVET EUROPEEN

(11) **EP 3 030 940 B1**
(45) Date de publication et mention de la délivrance du brevet: **15.05.2019**
(21) Numéro de dépôt: 14759020.2
(22) Date de dépôt: 30.07.2014
(51) Int. Cl.: G05B 11/01, G05B 19/416, F02C 9/28, G05B 19/404

(54) **PROCEDE ET MODULE DE FILTRAGE D'UNE CONSIGNE BRUTE**
VERFAHREN UND MODUL ZUM FILTERN EINES ROH-SOLLWERTS
METHOD AND MODULE FOR FILTERING A RAW SETPOINT

(30) Priorité: 09.08.2013 FR 1357910
(43) Date de publication de la demande: 15.06.2016
(73) Titulaire: Safran Aircraft Engines, 75015 Paris (FR)
(72) Inventeur: DJELASSI, Cedrik, F-77550 Moissy-Cramayel Cedex (FR)
(74) Mandataire: Delumeau, François Guy
(86) Numéro de dépôt international: PCT/FR2014/051978
(87) Numéro de publication internationale: WO 2015/019003

(56) Documents cités:
- DE-A1-102004 050 994
- DE-A1-102007 027 827
- FR-A1- 2 870 792

## Description

### Arrière-plan de l'invention

L'invention se rapporte au domaine général de la gestion d'une consigne dans un moteur.

Elle vise en particulier à minimiser le problème d'overshoot connu notamment dans les systèmes fonctionnant en mode d'asservissement selon lequel la grandeur réglée vient temporairement dépasser le niveau de la consigne variable.

L'invention trouve une application particulière mais non limitative dans un système de régulation d'un turboréacteur, le rôle d'un tel système étant de maintenir le point de fonctionnement du réacteur de façon à obtenir une poussée demandée par le pilote.

En effet, et en particulier dans le domaine des turboréacteurs, il est nécessaire, pour pouvoir absorber ce phénomène d'overshoot, de prévoir une marge de sécurité entre le régime maximum à atteindre pour délivrer la poussée spécifiée et les limites de tenue mécanique du réacteur, ce surdimensionnement entraînant de façon dommageable une augmentation de la masse du turboréacteur.

Dans le domaine des turboréacteurs, il est usuel, pour éviter ou limiter les phénomènes d'overshoot, de jouer sur le réglage du réseau correcteur de contrôle de régime générant la commande de débit carburant aux doseurs du turboréacteur.

Ces méthodes dégradent malheureusement les performances du correcteur, y compris dans les phases de fonctionnement pour lesquelles le réglage initial était satisfaisant. Elles nécessitent en outre des doseurs rapides et relativement onéreux pour pouvoir réagir aux consignes transmises par le réseau correcteur.

L'invention vise notamment à pallier ces inconvénients.

### Objet et résumé de l'invention

La présente invention répond à ce besoin en proposant un procédé de filtrage d'une consigne brute selon la revendication 1.

Ainsi, et d'une façon générale, l'invention propose une solution visant à filtrer la consigne en amont du réseau correcteur, ce qui permet d'éviter tous les problèmes inhérents au remplacement ou au réglage du réseau correcteur.

Dans un mode particulier de réalisation de l'invention, la condition de filtrage est vérifiée lorsque le régime moteur dépasse une valeur seuil de protection.

Ce mode de réalisation particulier permet avantageusement de n'intervenir que sur les régimes moteur très élevés, proches des limites de tenue mécanique du moteur.

Le procédé selon la revendication 1 permet de ralentir les gradients de régime en fin d'accélération de manière à approcher la consigne finale suffisamment lentement pour éviter le dépassement (« overshoot »).

Corrélativement, l'invention vise aussi un module de filtrage d'une consigne brute selon la revendication 3.

L'invention vise aussi un système de régulation d'un turboréacteur comportant un module de filtrage tel que mentionné ci-dessus, un réseau correcteur, un réacteur et un capteur de régime.

L'invention vise également un turboréacteur comportant un système de régulation tel que mentionné ci-dessus.

### Brève description des dessins

D'autres caractéristiques et avantages de la présente invention ressortiront de la description faite ci-dessous, en référence aux dessins annexés qui en illustrent un exemple dépourvu de tout caractère limitatif.

Sur les figures :
- la figure 1 représente de façon schématique un turboréacteur conforme à un mode particulier de réalisation de l'invention ;
- la figure 2 représente un système de régulation conforme à un mode particulier de réalisation de l'invention ;
- la figure 3 représente un principe de filtrage de consigne conforme à un mode particulier de réalisation de l'invention ;
- la figure 4 représente de façon schématique un module de filtrage conforme à un mode particulier de réalisation de l'invention ;
- la figure 5 représente de façon schématique un limiteur de gradient pouvant être utilisé dans le module de filtrage de la figure 4 ; et
- la figure 6 représente sous forme d'organigramme les principales étapes d'un procédé de filtrage de consigne conforme à un mode particulier de réalisation de l'invention.

### Description détaillée de l'invention

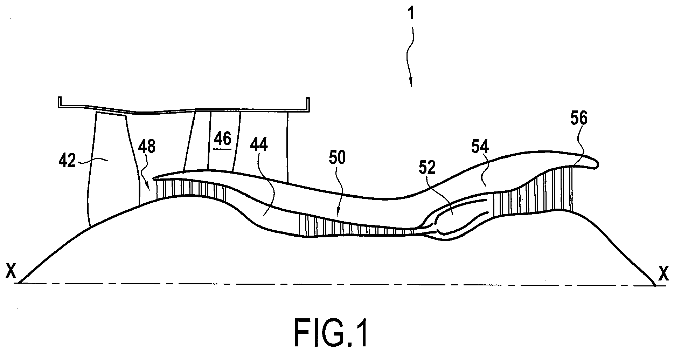

La figure 1 représente de façon schématique un turboréacteur 1 d'aéronef conforme à un mode particulier de réalisation de l'invention.

De façon connue, ce turboréacteur d'axe longitudinal X-X comporte notamment une soufflante 42 qui délivre un flux d'air dans une veine d'écoulement de flux primaire 44 et dans une veine d'écoulement de flux secondaire 46 coaxiale à la veine d'écoulement de flux primaire.

D'amont en aval, dans le sens d'écoulement de flux gazeux la traversant, la veine d'écoulement de flux primaire 44 comporte un compresseur basse pression 48, un compresseur haute pression 50, une chambre de combustion 52, une turbine haute pression 54 et une turbine basse pression 56.

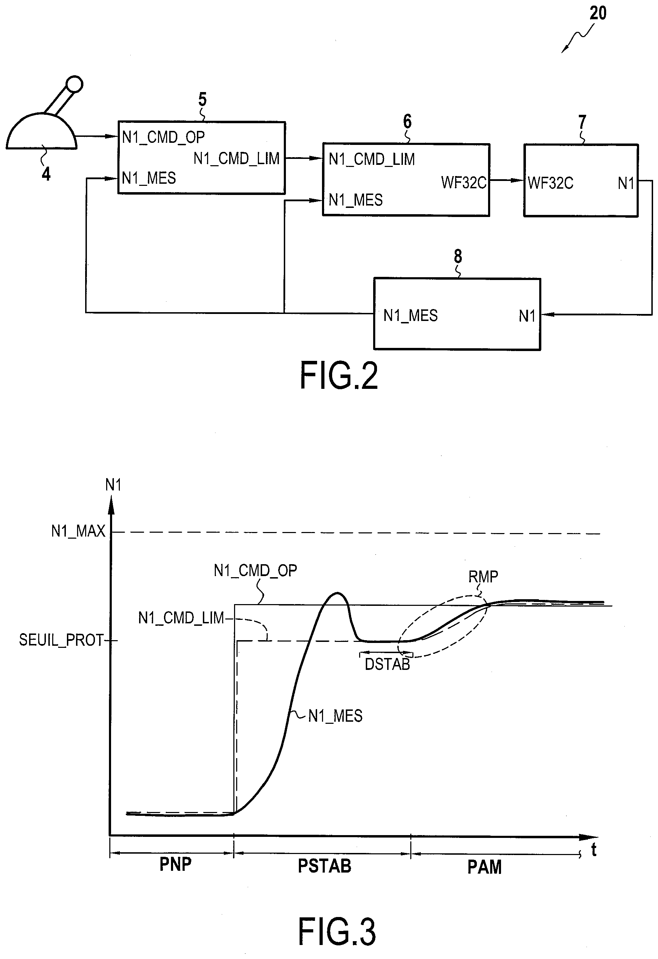

Le turboréacteur 1 est régulé par un système de régulation 20 conforme à l'invention représenté à la figure 2. D'une façon générale, ce système de régulation détermine une consigne de débit de carburant WF32C et commande l'injection de carburant dans le turboréacteur en fonction de la consigne de débit de carburant déterminée.

Dans le mode de réalisation décrit ici, ce système de régulation 20 comporte un module de filtrage 5 conforme à l'invention, un réseau correcteur 6, un réacteur 7 et un capteur de régime 8.

De façon connue, le réseau correcteur 6 fournit la consigne de débit de carburant WF32C au réacteur 7 en fonction de la différence entre une consigne N1_CMD_LIM de régime moteur et une mesure N1_MES de régime moteur déterminée par le capteur de régime 8.

De façon remarquable, la consigne N1_CMD_LIM de régime moteur, déterminée par le module de filtrage 5, est une consigne filtrée à l'approche des limites de tenue mécanique du turboréacteur 1.

Dans le mode de réalisation décrit ici, le module de filtrage 5 détermine la consigne filtrée N1_CMD_LIM de régime moteur en fonction d'une consigne brute de régime moteur N1_CMD_OP proportionnelle à la position d'une manette de commande 4 contrôlée par un pilote de l'aéronef et de la mesure N1_MES du régime moteur déterminée par le capteur de régime.

La figure 3 illustre le principe de fonctionnement du module de filtrage 5. Sur cette figure :
- l'axe des abscisses est un axe des temps t ;
- l'axe des ordonnées représente le régime moteur, à savoir dans cet exemple, la vitesse de rotation du corps haute-pression 50, 54 ;
- la limite N1MAX de régime moteur définie par les caractéristiques mécaniques du turboréacteur ;
- la consigne brute de régime moteur N1_CMD_OP ;
- la consigne filtrée de régime moteur N1_CMD_LIM ; et
- la mesure N1_MES du régime moteur.

Conformément à l'invention, la consigne filtrée N1_CMD_LIM de régime moteur est régie selon trois phases, à savoir :
- une première phase, dite «phase de non protection (PNP) », tant que la consigne brute de régime moteur N1_CMD_OP est inférieure à un seuil de protection SEUIL_PROT, phase au cours de laquelle la consigne filtrée N1_CMD_LIM correspond exactement à la consigne brute N1_CMD_OP, aucune correction de la consigne brute n'étant effectuée ;
- une deuxième phase, dite « phase de stabilisation (PSTAB) » au cours de laquelle on force la consigne filtrée de régime moteur N1_CMD_LIM à la valeur du seuil de protection SEUIL_PROT, lorsque la consigne brute de régime moteur N1_CMD_OP dépasse ce seuil de protection SEUIL_PROT et tant que le régime moteur N1_MES n'est pas stabilisé autour de la consigne limitée de régime moteur N1_CMD_LIM ;
- une troisième phase, dite « phase d'accélération modérée (PAM) » au cours de laquelle, on amène progressivement la consigne limitée de régime moteur N1_CMD_LIM à rejoindre la consigne brute de régime moteur N1_CMD_OP suivant une rampe RMP modérée, une fois que le régime moteur N1_MES est stabilisé autour de la consigne filtrée N1_CMD_LIM pendant une durée de stabilisation DSTAB.

Dans l'exemple de réalisation décrit ici, la durée de stabilisation DSTAB est choisie de l'ordre de 0.5s et la rampe RMP est un gradient de l'ordre de 200 rmp/s permettant de rejoindre le niveau nominal de la commande en 0.8s environ.

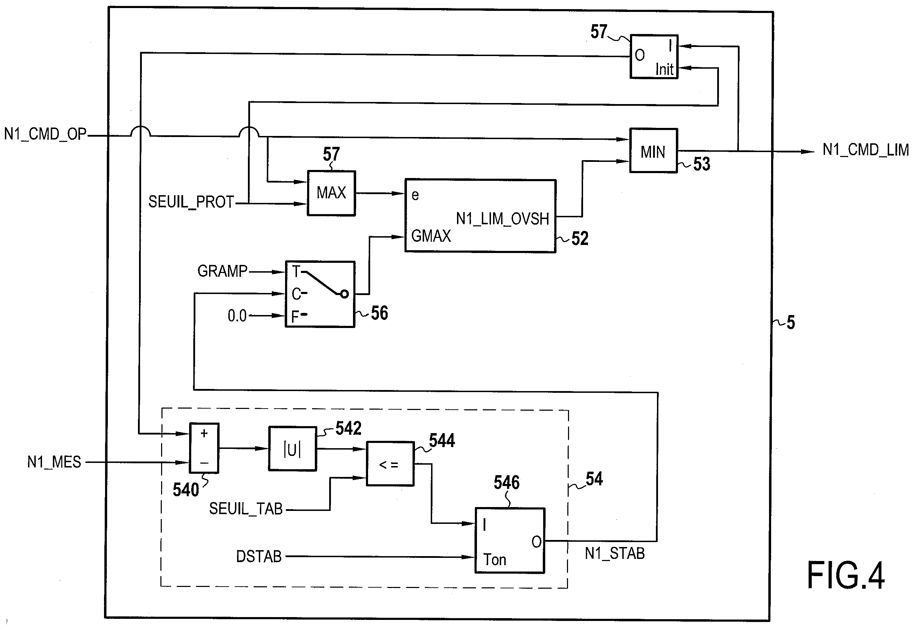

La figure 4 représente un module de filtrage conforme à un mode particulier de réalisation de l'invention.

Dans la suite de la description, on considère des signaux et des paramètres échantillonnés à une période d'échantillonnage *Te.* Cette période d'échantillonnage est par exemple de l'ordre de 20 à 40 ms.

On notera cependant que l'invention peut également être mise en oeuvre avec des signaux et des paramètres continus.

Comme décrit précédemment, le module de filtrage 5 reçoit en entrée la consigne brute de régime moteur N1_CMD_OP et la mesure de régime moteur N1_MES ; il fournit en sortie la consigne filtrée de régime moteur N1_CMD_LIM.

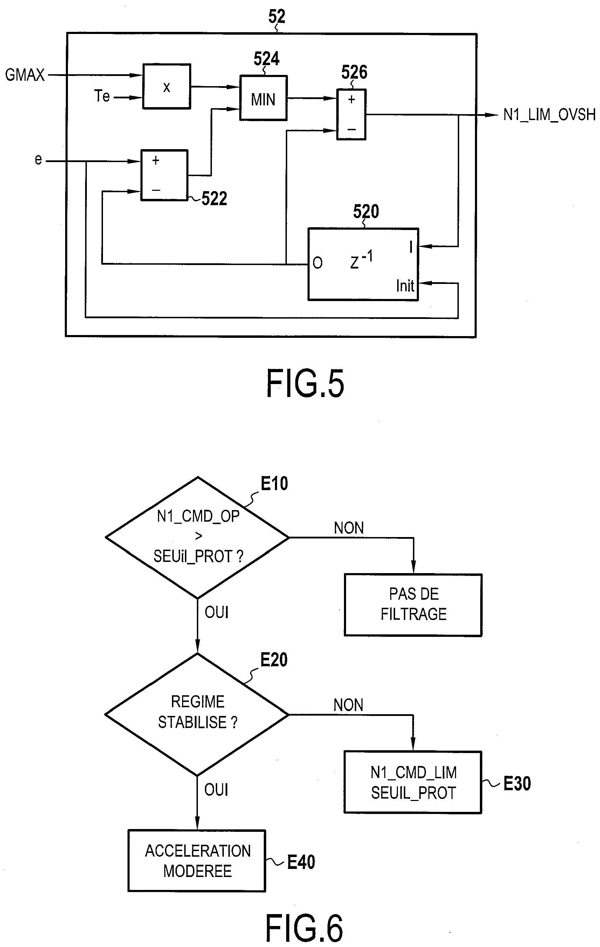

Dans le mode de réalisation décrit ici, le module de filtrage 5 comporte un limiteur de gradient 52, décrit ultérieurement en référence à la figure 5, apte à retourner une valeur N1_LIM_OVSH conforme aux phases de non protection PNP, de stabilisation PSTAB, et d'accélération modérée PAM déjà décrites. Plus précisément, la valeur N1_LIM_OVSH :
- est égale au seuil de protection SEUIL_PROT pendant les phases de non protection PNP et de stabilisation PSTAB ;
- augmente progressivement du seuil de protection SEUIL_PROT jusqu'à la consigne brute de régime moteur N1_CMD_OP suivant la rampe RMP, pendant la phase d'accélération modérée PAM.

Dans le mode de réalisation décrit ici, la consigne filtrée de régime moteur N1_CMD_LIM est le minimum entre la valeur N1_LIM_OVSH retournée par le limiteur de gradient 52 et la consigne brute de régime moteur N1_CMD_OP (module MIN 53, figure 4).

Le module de filtrage 5 comporte un module 54 apte à déterminer si le régime moteur N1_MES est stabilisé autour de la consigne filtrée de régime moteur N1_CMD_LIM pendant une durée DSTAB, condition nécessaire de la phase de stabilisation PSTAB.

Dans l'exemple de réalisation décrit ici, ce module 54 comporte :
- un soustracteur 540 apte à obtenir la différence entre la mesure N1_MES(n) de régime moteur et la consigne filtrée de régime moteur N1_CMD_LIM(n-1) à l'échantillon précédent (élément retardateur 57, figure 4) ;
- un élément 542 connu de l'homme du métier apte à déterminer la valeur absolue de cette différence ;
- un comparateur 544 apte à comparer cette valeur absolue avec un seuil de stabilisation SEUIL_STAB proche de zéro ; et
- un compteur 546 apte à renvoyer un signal N1_STAB à la valeur VRAI dès lors que l'entrée I du compteur 546 est à VRAI pendant la durée DSTAB.

Le limiteur de gradient 52 est décrit en référence à la figure 5. Il reçoit en entrée :
- une valeur de gradient GMAX, déterminée par un sélecteur de gradient 56, égale à 0 lorsque le régime moteur N1_MES n'est pas stabilisé (N1_STAB = FAUX) et à une valeur de gradient de rampe GRAMP lorsque le régime moteur est stabilisé (N1_STAB = VRAI) ; et
- la valeur e maximum entre la consigne brute de régime moteur N1_CMD_OP et le seuil de protection SEUIL_PROT (module MAX 57, figure 4). Au démarrage du système, la valeur e vaut donc SEUIL_PROT.

Le limiteur de gradient 52 comporte un retardateur 520 initialisé au seuil de protection SEUIL_PROT, apte à fournir la valeur du signal de sortie à l'échantillon précédent N1_LIM_OVSH(n-1).

Le limiteur de gradient 52 comporte un module soustracteur 522 apte à calculer la différence entre la valeur d'entrée et N1_LIM_OVSH(n-1). Pendant toute la phase de non protection PNP, la sortie du module soustracteur 522 est donc égale à 0.

Le limiteur de gradient 52 comporte un module 524 apte à déterminer le minimum entre la sortie du module soustracteur 522 et la valeur GMAX égale à 0 tant que le régime moteur n'est pas stabilisé.

Le limiteur de gradient comporte un module additionneur 526 apte à fournir le signal de sortie N1_LIM_OVSH(n) en additionnant la sortie du module 524 avec la valeur du signal de sortie à l'échantillon précédent N1_LIM_OVSH(n-1).

Pendant toute la phase de non protection PNP, le signal de sortie N1_LIM_OVSH est donc égal au seuil de protection SEUIL_PROT.

Lorsque la consigne brute de régime moteur N1_CMD_OP dépasse le seuil de protection SEUIL_PROT, la sortie du module soustracteur 522 devient positive.

Mais durant toute la phase de stabilisation PSTAB, la valeur de gradient GMAX déterminée par le sélecteur de gradient 56 reste nulle, si bien que le signal de sortie N1_LIM_OVSH reste égal au seuil de protection SEUIL_PROT.

Une fois le régime moteur N1_MES stabilisé autour de la consigne filtrée de régime moteur N1_CMD_LIM, la valeur de gradient GMAX prend la valeur de gradient de rampe GRAMP, de sorte que le signal de sortie N1_LIM_OVSH augmente progressivement de la valeur du seuil de protection SEUIL_PROT jusqu'à la consigne brute de régime moteur N1_CMD_OP, conformément à la rampe RMP de la phase d'accélération modérée PAM.

La figure 6 représente respectivement un procédé de filtrage de consigne conforme à un mode particulier de réalisation de l'invention.

Ce procédé comporte une étape E10 au cours de laquelle on vérifie si la condition de filtrage de la consigne brute est vérifiée. Dans le mode de réalisation décrit ici, cela consiste à vérifier si la consigne brute N1_CMD_OP est supérieure au seuil de protection SEUIL_PROT. Si tel n'est pas le cas, la consigne brute est envoyée au réseau correcteur 6 sans modification.

Si la condition de filtrage est détectée, on vérifie, au cours d'une étape E20, si le régime moteur N1_MES est stabilisé autour de la consigne filtrée N1_CMD_LIM. Si tel n'est pas le cas, la consigne filtrée envoyée au réseau correcteur 6 est limitée à la valeur du seuil de protection SEUIL_PROT (étape E30).

Dès lors que le régime moteur N1_MES est stabilisé autour de la consigne filtrée N1_CMD_LIM, on augmente progressivement la consigne filtrée N1_CMD_LIM jusqu'à rejoindre la consigne brute N1_CMD_OP (étape E40).

## Revendications

1. Procédé de filtrage d'une consigne brute (N1_CMD_OP) destinée à un réseau correcteur (6) dans un système (20) de régulation d'un moteur (1), ledit procédé étant **caractérisé en ce qu'**il comporte :
- une étape (E10) de détection d'une condition de filtrage de ladite consigne brute, et ;
- une étape (E30, E40) de fourniture d'une consigne filtrée (N1_CMD_LIM) d'un régime moteur (N1 MES) audit réseau correcteur (6) à la place de ladite consigne brute, lorsque ladite condition de filtrage est détectée, ladite consigne filtrée étant régie selon :
- une phase (PSTAB) au cours de laquelle la consigne filtrée est limitée à une valeur seuil de protection (SEUIL PROT) tant que le régime moteur (N1 MES) n'est pas stabilisé autour de la consigne filtrée: et
- une phase (PAM) au cours de laquelle la consigne filtrée est amenée progressivement à rejoindre la consigne brute suivant une rampe (RMP) une fois le régime moteur stabilisé autour de la consigne filtrée pendant une durée de stabilisation (DSTAB).

2. Procédé de filtrage selon la revendication 1, **caractérise en ce que** la condition de filtrage est vérifiée lorsque le régime moteur (N1_MES) dépasse une valeur seuil de protection (SEUIL_PROT).

3. Module (5) de filtrage d'une consigne brute (N1_CMD_OP) destinée à un réseau correcteur (6) dans un système (20) de régulation d'un moteur, ledit module étant **caractérisé en ce qu'**il comporte :
- un module (54) de détection d'une condition de filtrage de ladite consigne brute, et ;
- des moyens pour fournir audit réseau correcteur une consigne filtrée (N1_CMD_LIM) d'un régime moteur (N1 MES) à la place de ladite consigne brute, lorsque la condition de filtrage est détectée, ladite consigne filtrée étant régie selon:
- une phase (PSTAB) au cours de laquelle la consigne filtrée est limitée à une valeur seuil de protection (SEUIL PROT) tant que le régime moteur (N1 MES) n'est pas stabilisé autour de la consigne filtrée; et
- une phase (PAM) au cours de laquelle, la consigne filtrée est amenée progressivement à rejoindre la consigne brute suivant une rampe (RMP) une fois le régime moteur stabilisé autour de la consigne filtrée pendant une durée de stabilisation (DSTAB).

4. Système (20) de régulation d'un turboréacteur (1) comportant un module de filtrage (5) selon la revendication 3, un réseau correcteur (6), un réacteur (7) et un capteur de régime (8).

5. Turboréacteur (1) comportant un système de régulation (20) selon la revendication 4.

## Patentansprüche

1. Verfahren zum Filtern eines Roh-Sollwerts (N1_CMD_OP), der für ein Korrekturnetzwerk (6) in einem System (20) zur Regelung eines Motors (1) bestimmt ist, wobei das Verfahren **dadurch gekennzeichnet ist, dass** es umfasst:
- einen Schritt (E10) zur Feststellung einer Filterbedingung des Roh-Sollwerts, und,
- einen Schritt (E30, E40) zur Lieferung eines gefilterten Sollwerts (N1_CMD_LIM) einer Motordrehzahl (N1_MES) an das Korrekturnetzwerk (6) anstatt des Roh-Sollwerts, wenn die Filterbedingung festgestellt wird, wobei der gefilterte Sollwert geregelt wird gemäß:
- einer Phase (PSTAB), während der der gefilterte Sollwert auf einen Schutzschwellenwert (SEUIL_PROT) beschränkt wird, solange die Motordrehzahl (N1_MES) nicht um den gefilterten Sollwert stabilisiert ist, und
- einer Phase (PAM), während der der gefilterte Sollwert allmählich dazu gebracht wird, den Roh-Sollwert gemäß einer Rampe (RMP) zu erreichen, nachdem die Motordrehzahl sich während einer Stabilisierungsdauer (DSTAB) um den gefilterten Sollwert stabilisiert hat.

2. Verfahren zum Filtern nach Anspruch 1, **dadurch gekennzeichnet, dass** die Filterbedingung überprüft wird, wenn die Motordrehzahl (N1_MES) einen Schutzschwellenwert (SEUIL_PROT) überschreitet.

3. Modul (5) zum Filtern eines Roh-Sollwerts (N1_CMD_OP), der für ein Korrekturnetzwerk (6) in einem System (20) zur Regelung eines Motors bestimmt ist, wobei das Modul **dadurch gekennzeichnet ist, dass** es umfasst:
- ein Modul (54) zur Feststellung einer Filterbedingung des Roh-Sollwerts, und
- Mittel zur Lieferung eines gefilterten Sollwerts (N1_CMD_LIM) einer Motordrehzahl (N1_MES) an das Korrekturnetzwerk anstatt des Roh-Sollwerts, wenn die Filterbedingung festgestellt wird, wobei der gefilterte Sollwert geregelt wird gemäß:
- einer Phase (PSTAB), während der der gefilterte Sollwert auf einen Schutzschwellenwert (SEUIL_PROT) beschränkt wird, solange die Motordrehzahl (N1_MES) nicht um den gefilterten Sollwert stabilisiert ist, und
- einer Phase (PAM), während der der gefilterte Sollwert allmählich dazu gebracht wird, den Roh-Sollwert gemäß einer Rampe (RMP) zu erreichen, nachdem die Motordrehzahl sich während einer Stabilisierungsdauer (DSTAB) um den gefilterten Sollwert stabilisiert hat.

4. System (20) zur Regelung eines Turbinenstrahltriebwerks (1), das ein Modul (5) zum Filtern nach Anspruch 3, ein Korrekturnetzwerk (6), ein Strahltriebwerk (7) und einen Drehzahlsensor (8) umfasst.

5. Turbinenstrahltriebwerk (1), das ein System (20) zur Regelung nach Anspruch 4 umfasst.

## Claims

1. A method of filtering a raw setpoint (N1_CMD_OP) for a corrector network (6) in a system (20) for regulating an engine (1), said method comprising:
- a step (E10) of detecting a filtering condition for filtering the raw setpoint; and
- a step (E30, E40) of supplying a filtered setpoint (N1_CMD_LIM) of an engine speed (N1_MES) to the corrector network (6) instead of the raw setpoint when the filtering condition is detected, wherein the filtered setpoint is adopted in:
a stage (PSTAB) in which the filtered setpoint is limited to a protection threshold value (SEUIL_PROT) while the engine speed has not stabilized around the set filtered setpoint ; and
a stage (PAM) in which the filtered setpoint is brought progressively to the raw setpoint according to a ramp (RMP) once the engine speed has stabilized around the set filtered setpoint for a stabilization duration (DSTAB).

2. A method for filtering according to claim 1 wherein the filtering condition is detected when the engine speed (N1_MES) exceeds the protection threshold value (SEUIL_PROT).

3. A module (5) for filtering a raw setpoint (N1_CMD_OP) for a corrector network (6) in a system (20) for regulating an engine, said module being **characterized in that** it comprises:
- a detection module (54) for detecting a filtering condition for filtering the raw setpoint ; and
- means configured to supply a filtered setpoint (N1_CMD_LIM) of an engine speed (N1_MES) to the corrector network instead of the raw setpoint when the filtering condition is detected, wherein the filtered setpoint is adopted in:
a stage (PSTAB) in which the filtered setpoint is limited to a protection threshold value (SEUIL_PROT) while the engine speed has not stabilized around the set filtered setpoint ; and
a stage (PAM) in which the filtered setpoint is brought progressively to the raw setpoint according to a ramp (RMP) once the engine speed has stabilized around the set filtered setpoint for a stabilization duration (DSTAB).

4. A system (20) for regulating a turbojet (1) comprising a filtering module (5) according to claim 3, a corrector network (6), a jet (7), and a speed sensor (8).

5. A turbojet (1) comprising a regulator system (20) according to claim 4.
